# EUROPÄISCHE PATENTSCHRIFT

(11) **EP 1 980 490 B1**
(45) Veröffentlichungstag und Bekanntmachung des Hinweises auf die Patenterteilung: **27.07.2011**
(21) Anmeldenummer: 08007288.7
(22) Anmeldetag: 14.04.2008
(51) Int. Cl.: B64F 1/32, B65G 65/00, B65G 67/08

(54) **Anlage zum Einladen von Gepäckstücken in Container**
Installation for loading luggage into containers
Installation de chargement de bagages dans un conteneur

(30) Priorität: 12.04.2007 DE 102007017288
(43) Veröffentlichungstag der Anmeldung: 15.10.2008
(60) Teilanmeldung: 10008979.6
(73) Patentinhaber: Lödige Fördertechnik GmbH, 34414 Warburg (DE)
(72) Erfinder: Lödige, Rudolf, Dr., 33100 Paderborn (DE)
(74) Vertreter: Ostermann, Thomas

(56) Entgegenhaltungen:
- DE-A1- 19 719 748
- DE-U- 7 313 036
- JP-A- 5 208 731
- US-A- 3 838 763
- US-A1- 2006 133 913

## Beschreibung

Die Erfindung bezieht sich auf eine Anlage gemäß den Merkmalen des Oberbegriffs des Patentanspruchs 1.

Es ist bekannt, die für den Gepäcktransport in Flugzeugen vorgesehenen Container maschinell zu beladen, dafür werden Handlingsroboter eingesetzt. Ein derartiger Roboter kann jeweils nur ein einziges Gepäckstück aufnehmen und durch die Beladeöffnung des jeweiligen Containers hindurch in das Containerinnere hineinbringen, um es dort an einer bestimmten Stelle abzulegen. Danach fährt der Roboter mit dem Gepäckgreifer zurück zu der Station, von der das nachfolgende Gepäckstück aufgenommen wird. Das gesamte Arbeitsspiel des Handlingsroboters für den Hin- und Rückweg des Gepäckgreifers nimmt erhebliche Zeit in Anspruch und läßt sich nicht mit Rücksicht auf den sicheren Transport des jeweiligen Gepäckstücks beliebig beschleunigen. Gemessen an seiner Beladekapazität ist ein derartiger Handlingsroboter eine aufwendige Maschine.

Aus der US 3 838 763 A ist bereits eine Anlage bekannt, die der Beladung von Containern dient, wobei durch relatives Verfahren der Container zu einem Förderband in Längen- und Höhenrichtung der Container verschiedene Positionen des Containerinneren Angefahren werden können.

Nachteilig bei dieser Anlage ist jedoch, dass die Anlage einen direkten Zugang der zu beladenden Position im Container durch die der Anlage zugewandte Wand erfordert. Die Anlage ermöglicht nicht das Erreichen von Stellen im Container, die durch der Anlage zugewandte Wände verdeckt sind oder tief im Containerinneren liegen.

Weiterhin ist aus der US 2006/133913 A1 eine Beladevorrichtung für Flugzeuge bekannt, bei der ein in Höhenrichtung schwenkbares und anstellbares Förderband benutzt wird, um bei der Beladung von Flugzeugen deren Gepäckraum vom Flugfeld aus zu beladen, wobei ein Querförderer an der Spitze des schräg anstellbaren Förderbands benutzt wird, um schwer zugängliche Bereiche eines Flugzeugs zu erreichen.

Nachteilig ist bei dieser Einrichtung, dass die Konstruktion mit gegeneinander schwenkbaren Förderbändern bei der Beladung von Containern einen unnötigen konstruktiven Mehraufwand bedeutet, der aus der Aufgabe der Beladung von Flugzeugrümpfen, die von schräg unten erfolgen muss, resultiert.

Der Erfindung liegt die Aufgabe zugrunde, eine Anlage der eingangs genannten Art zu schaffen, die gemessen an dem erforderlichen maschinellen Aufwand eine hohe Beladekapazität aufweist. Diese Aufgabe wird mit einer die Merkmale des Patentanspruchs 1 aufweisenden Anlage gelöst.

Für die Erfindung ist wesentlich, daß mit den vorgesehenen Fördermitteln für die Gepäckstücke eine Beladung der Container mit dichter Folge der Gepäckstücke vorgenommen werden kann. Die relative Beweglichkeit zwischen dem Linearförderer einschließlich dem Querförderer einerseits und dem Container andererseits ermöglicht es, alle Stellen im Innenraum des jeweils zu beladenden Containers zu erreichen, so daß der Container mit den Gepäckstücken von unten nach oben hin vollgepackt werden kann. Hierbei können die Gepäckstücke schonend abgesetzt werden, indem der Linearförderer oder der Querförderer zum einen und der Container zum anderen relativ zueinander so bewegt werden, daß beim Absetzvorgang der abgebende Förderer sich vom jeweiligen Abladeplatz entfernt.

Vorteilhafte Ausgestaltungsmerkmale der Erfindung ergeben sich aus den Unteransprüchen.

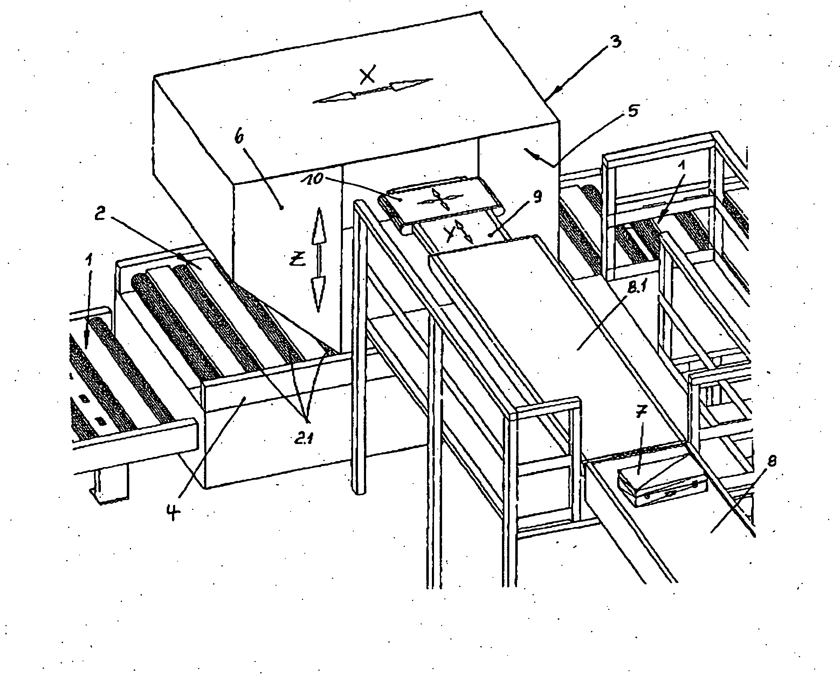

Die Erfindung wird nachfolgend anhand der zeichnung an einem Ausführungsbeispiel noch näher erläutert. Die Zeichnung zeigt in schematischer, perspektivischer Ansicht schräg von oben her gesehen eine Anlage zum Einladen von Gepäckstücken in Container.

Im einzelnen erkennt man in der Zeichnung eine erste Fördervorrichtung 1, in die eine Ladestation 2 integriert ist. Die Ladestation 2 weist einen Bereitstellungsplatz für einen zu beladenden Container 3 auf, und dieser Bereitstellungsplatz befindet sich auf einem Hubtisch 4, der aus der Förderebene der Fördervorrichtung 1 abgesenkt oder daraus nach oben hin angehoben werden kann. Die Fördervorrichtung 1 dient zum Beför - dern der Container 3 zur Ladestation 2 hin und von dort weg. So weist der Hubtisch 4 der Ladestation 2 eine in niveaugleicher Position an die Fördervorrichtung 1 anschließende Fördereinrichtung 2.1 auf, in deren Förderrichtung der jeweilige Container 3 sowohl vor- als zurückgefahren werden kann, worauf nachstehend noch näher eingegangen werden wird.

Die Container 3 sind lediglich an einer ihrer Längsseiten offen und weisen dort eine Beladeöffnung 5 auf, an die ebenengleich mit der Beladeöffnung 5 fluchtend eine Seitenwand 6 anschließt. Hinter dieser Seitenwand 6 befindet sich im Containerinnern ein erheblicher Teil des gesamten Stauraums. Die Container 3 werden an der Ladestation 2 auf dem Bereitstellungsplatz stets so positioniert, daß die Beladeöffnung 5 immer an derselben Seite der Ladestation 2 bzw. des darauf befindlichen Bereitstellungsplatzes angeordnet ist.

Quer zur Fördervorrichtung 1 erstreekt,sich eine Transportvorrichtung 8 für die in den jeweiligen Container 3 einzuladenden Gepäckstücke 7. Die Transportvorrichtung 8 reicht mit ihrem Förderende 8.1 bis an die Ladestation 2 heran. Das Förderende 8.1 der Transportvorrichtung 8 befindet sich deshalb nahe an der Beladeöffnung 5 des jeweiligen auf der Ladestation 2 bereitgestellten Containers 3. An diesem Förderende 8.1 ist ein unterseitiger Stauraum versehen, in dem sowohl ein Linearförderer 9 als auch ein Querförderer 10 Platz finden. Der Linearförderer 9 und der Querförderer 10 sind in Richtung der Förderrichtung der Transportvorrichtung 8 über deren Förderende 8.1 hinaus ausfahrbar. Die Förderrichtung des Querförderers 10 steht senkrecht zu der des Linearförderers 9, dessen Förderrichtung mit der Transportrichtung der Transportvorrichtung 8 fluchtet. Der Querförderer 10 ist am Linearförderer 9 relativ dazu längsverfahrbar geführt, und er ist mittels einer am Ende des Linearförderers 9 ausfahrbaren Vorrichtung in einer Endposition so gehalten, daß die Förderebenen des Linearförderers 9 und des Querförderers 10 niveaugleich oder unter einem stumpfen Winkel aneinander anschliessen. Vorzugsweise ist hierbei zumindest die Förderebene des Querförderers 10 horizontal ausgerichtet.

Der Querförderer 10 hat in seiner Förderrichtung eine Länge, die gleich groß oder geringfügig größer als die Breite des Linearförderers 9 ist. Dieses Längenmaß des Querförderers 10 und entsprechend die Breite des Linearförderers 9 ist erheblich geringer als die Weite der Beladeöffnung 5 in Breitenrichtung der Container 3 gesehen. Die Beladeöffnung 5 reicht über die gesamte Höhe der Container 3, und während des Beladevorgangs ist durch eine Relativbewegung zwischen dem jeweiligen Container 3 und dem Linearförderer 9 einschließlich dem Querförderer 10 dafür gesorgt, daß die Gepäckstücke beim Einlagern in den Containern keine größeren Fallhöhen zu überwinden haben.

So erfolgt die Beladung des jeweiligen Containers 3, indem die Gepäckstücke 7, die über die Transportvorrichtung 8 heranbefördert werden, im Inneren des Containers 3 nach und nach in übereinanderliegenden Lagen angeordnet werden. Hierzu befindet sich bei Beginn des Beladevorgangs der Container 3 in seiner oberen Position in Richtung des Pfeiles Z, und es erfolgt das Einladen der Gepäckstücke, indem entweder nur der Linearförderer 9 oder der Linearförderer 9 zusammen mit dem Querförderer 10 in Richtung des Pfeiles Y aus- und eingefahren werden, wobei des weiteren der Container 3 über die Fördereinrichtung 2.1 der Beladestation 2 in Richtung des Pfeiles X hin- und herverfahren wird und des weiteren die Förderrichtung des Querförderers umgekehrt wird. Das Einlagern der Gepäckstücke in der X-Richtung wird über den Querförderer 10 vorgenommen, der hierzu - wie in der Zeichnung dargestellt - am Ende des Linearförderers 9 positioniert ist. Das Einlagern der Gepäckstücke 7 in der Y-Richtung erfolgt ausschließlich über den Linearförderer 9, der hierbei zunehmend unter die Fördervorrichtung 8 eingefahren wird. Das weitere Einlagern der Gepäckstücke 7 in den höheren Lagerebenen im Container 3 geschieht, indem der Container 3 nach und nach über den Hubtisch abgesenkt wird.

Alternativ können anstelle des Containers 3 auch der Linearförderer 9 und der Querförderer 10 in der vertikalen X-Z-Ebene bewegt werden. Dazu kann das Förderende 8.1 der Transportvorrichtung 8 auf- und abschwenkbar auf einer Hubvorrichtung aufgelagert sein, gegebenenfalls kommt auch ein seitliches Verschieben in der X-Richtung in Betracht. Dementsprechend muß für eine störungsfreie Übergabe der Gepäckstücke 7 von der Transportvorrichtung 8 auf deren Förderende 8.1 gesorgt sein.

## Patentansprüche

1. Anlage zum Einladen von Gepäckstücken (7) in in Flugzeugen mitführbaren Containern (3), die an einer Längsseite eine über die gesamte Containerhöhe reichende Beladeöffnung (5) aufweisen, an die sich fluchtend mit ihrer Öffnungsebene eine Seitenwand (6) anschließt, hinter der sich ein Teil des Stauraums im Containerinnern befindet,
aufweisend
- eine Ladestation (2) zur Aufnahme je eines der Container (3) mit Ausrichtung deren Beladeöffnungen (5) zur selben Seite der Ladestation (2) hin und durch eine bis an diese Seite der Ladestation (2) heranreichende Transportvorrichtung (8) für die Gepäckstücke (7), die einen an ihrem der Ladestation (2) benachbarten Ende (8.1) angeordneten Linearförderer (9) sowie einen damit zusammenwirkenden Querförderer (10) aufweist, welche durch die Beladeöffnung (5) des jeweils auf der Ladestation (2) aufgenommenen Containers (3) hindurch bis in das Containerinnere hinein ausfahrbar sind, **dadurch gekennzeichnet, dass** der Linearförderer (9) mit dem Querförderer (10) und/oder die Ladestation (2) für die Container (3) jeweils relativ zueinander höhenverfahrbar sind, wobei der Querförderer (10) entlang dem Linearförderer (9) verfahrbar und am Ende des Linearförderers (9) in einer Position gehalten ist, in der die Förderebenen des Linearförderers und des Querförderers (10) niveaugleich aneinander anschließen.

2. Anlage nach Anspruch 1,
**dadurch gekennzeichnet,**
**daß** die Transport- und Ausfahrrichtung des Linearförderers (9) am Ende der Transportvorrichtung (8) senkrecht zu der Öffnungsebene der Beladeöffnungen (5) der auf der Ladestation (2) aufgenommenen Container (3) steht.

3. Anlage nach Anspruch 2,
**dadurch gekennzeichnet,**
**daß** die Förderrichtungen der Transportvorrichtung (8) und des an deren Ende ausgefahrenen Linearförderers (9) miteinander fluchten.

4. Anlage nach einem der Ansprüche 1 - 3,
**dadurch gekennzeichnet,**
**daß** die Ladestation (2) zur Aufnahme der Container (3) einen Hubtisch (4) aufweist.

5. Anlage nach einem der Ansprüche 1 - 4,
**dadurch gekennzeichnet,**
**daß** das Ende (8.1) der Transportvorrichtung (8) einschließlich dem Linerarförderer (9) sowie dem Querförderer (10) auf einer Hubvorrichtung angeordnet ist.

6. Anlage nach einem der Ansprüche 1 - 5,
**dadurch gekennzeichnet,**
**daß** der Linearförderer (9) schmaler und der Querförderer (10) kürzer als die Beladeöffnung (5) der Container (3) breit ist.

7. Anlage nach Anspruch 6,
**dadurch gekennzeichnet,**
**daß** die Ladestation (2) mit einer Einrichtung (2.1) zum Verfahren der Container (3) quer zur Längsrichtung des Linearförderers (9) ausgestattet ist.

8. Anlage nach Anspruch 6 oder 7,
**dadurch gekennzeichnet,**
**daß** das Ende (8.1) der Transportvorrichtung (8) einschließlich dem Linearförderer (9) sowie dem Querförderer (10) in Breitenrichtung der Beladeöffnung (5) der auf der Ladestation (2) aufgenommenen Container (3) verschieblich ist.

9. Anlage nach einem der Ansprüche 1 - 8,
**dadurch gekennzeichnet,**
**daß** die Ladestation (2) Teil eines Container-Förderers (1) ist, dessen Förderrichtung im Anschlußbereich der Transportvorrichtung (8) senkrecht zu deren Förderrichtung steht.

10. Anlage nach einem der Ansprüche 1 - 9,
**dadurch gekennzeichnet,**
**daß** der Querförderer (10) mit einer Einrichtung zur Umsteuerung seiner Förderrichtung versehen ist.

11. Anlage nach einem der Ansprüche 1 - 10,
**dadurch gekennzeichnet,**
**daß** die Transportvorrichtung (8) unterseitig einen Aufnahmeraum aufweist, in welchem der Linearförderer (9) und der Querförderer (10) in ihrer eingefahrenen Position angeordnet sind.

12. Anlage nach einem der Ansprüche 1 - 11,
**dadurch gekennzeichnet,**
**daß** die Transportvorrichtung (8), der Linearförderer (9) und der Querförderer (10) Bandförderer sind.

## Claims

1. Installation for loading luggage items (7) in containers (3) which can be carried in aircraft and which have on a longitudinal side a loading opening (5) which extends over the entire container height and which is adjoined by a side wall (6) lying flush with the opening plane and behind which is located a part of the stowage space inside the container, comprising a loading station (2) for receiving everyone of the containers (3) aligned with their loading openings (5) facing the same side of the loading station (2) and comprising a conveyor device (8) for the luggage articles (7) reaching up to this side of the loading station (2) and having a linear conveyor (9) mounted at its end (8.1) adjoining the loading station (2) as well as a transverse conveyor (10) interacting therewith which can extend through the loading opening (5) of the relevant container (3) received on the loading station (2) up into the inside of the container, **characterised in that** the linear conveyor (9) together with the transverse conveyor (10) and/or the loading station (2) for the containers (3) are each movable vertically relative to one another wherein the transverse container (10) is movable along the linear conveyor (9) and held at the end of the linear conveyor (9) in a position in which the conveyor planes of the linear conveyor and the transverse conveyor (10) adjoin one another at the same level.

2. Installation according to claim 1 **characterised in that** the transport and extension direction of the linear conveyor (9) at the end of the conveyor device (8) is perpendicular to the opening plane of the loading openings (5) of the containers (3) received at the loading station (2).

3. Installation according to claim 2 **characterised in that** the conveyor directions of the transport device (8) and of the linear conveyor (9) extended at the end thereof are aligned flush with one another.

4. Installation according to one of the claims 1 to 3 **characterised in that** the loading station (2) has a lifting table (4) for receiving the containers (3).

5. Installation according to one of claims 1 to 4 **characterised in that** the end (8.1) of the conveyor device (8) including the linear conveyor (9) as well as the transverse conveyor (10) is mounted on a lifting device.

6. Installation according to one of claims 1 to 5 **characterised in that** the linear conveyor (9) is narrower than and the transverse conveyor (10) is shorter than the width of the loading opening (5) of the container.

7. Installation according to claim 6 **characterised in that** the loading station (2) is equipped with apparatus (2.1) for moving the containers (3) transversely to the longitudinal direction of the linear conveyor (9).

8. Installation according to claim 6 or 7 **characterised in that** the end (8.1) of the conveyor device (8) including the linear conveyor (9) as well as the transverse conveyor (10) is displaceable in the width direction of the loading opening (5) of the container (3) received on the loading station (2).

9. Installation according to one of claims 1 to 8 **characterised in that** the loading station (2) is part of a container conveyor (1) whose conveyor direction in the connecting area of the conveyor device (8) is perpendicular to the conveyor direction thereof.

10. Installation according to one of claims 1 to 9 **characterised in that** the transverse conveyor (10) is equipped with apparatus for reversing its conveyor direction.

11. Installation according to one of claims 1 to 10 **characterised in that** the conveyor device (8) has on the underneath a receiving area in which the linear conveyor (9) and the transverse conveyor (10) are disposed when in their retracted position.

12. Installation according to one of claims 1 to 11 **characterised in that** the conveyor device (8), the linear conveyor (9) and the transverse conveyor (10) are conveyor belts.

## Revendications

1. Installation pour le chargement de bagages (7) dans des conteneurs (3), pouvant être transportés par avion, laquelle installation présente, sur un côté longitudinal, une ouverture de chargement (5), qui atteint la hauteur totale du conteneur, et à laquelle se raccorde à fleur, avec son plan d'ouverture, une paroi latérale (6), derrière laquelle est située une partie du compartiment de rangement à l'intérieur du conteneur, ladite installation comprenant une station de chargement (2) accueillant, chaque fois, l'un des conteneurs (3), dont les ouvertures de chargement (5) sont orientées vers le même côté de la station de chargement (2), et un dispositif de transport (8) pour les bagages (7), qui, parvenant jusqu'à ce côté de la station de chargement (2), est doté d'un transporteur linéaire (9), disposé à son extrémité (8.1) voisine de la station de chargement (2), ainsi que d'un transporteur transversal (10), coopérant avec celui-ci, lesdits transporteurs pouvant être conduits, à travers l'ouverture de chargement (5), jusqu'à l'intérieur du conteneur (3) respectif,
**caractérisé en ce que**
le transporteur linéaire (9), avec le transporteur transversal (10), et / ou la station de chargement (2) des conteneurs (3), peuvent être déplacés, l'un par rapport à l'autre, dans le sens de la hauteur, sachant que le transporteur transversal (10) peut être déplacé le long du transporteur linéaire (9) et maintenu, à l'extrémité dudit transporteur linéaire (9), dans une position, dans laquelle les plans de transport du transporteur linéaire et du transporteur transversal (10) se raccordent l'un à l'autre au même niveau.

2. Installation selon la revendication 1,
**caractérisée en ce que**
la direction de transport et de sortie du transporteur linéaire (9) à l'extrémité du dispositif de transport (8) est perpendiculaire au plan d'ouverture des ouvertures de chargement (5) des conteneurs (3), reçus à la station de chargement (2).

3. Installation selon la revendication 2,
**caractérisée en ce que**
les directions de transport du dispositif de transport (8) et du transporteur linéaire (9), sortant à l'extrémité de celui-ci, sont en alignement l'une avec l'autre.

4. Installation selon l'une des revendications 1 à 3,
**caractérisée en ce que**
la station de chargement (2) présente une table élévatrice (4) pour la réception des conteneurs (3).

5. Installation selon l'une des revendications 1 à 4,
**caractérisée en ce que**
l'extrémité (8.1) du dispositif de transport (8), y compris le transporteur linéaire (9) ainsi que le transporteur transversal (10), est agencée sur un dispositif élévateur.

6. Installation selon l'une des revendications 1 à 5,
**caractérisée en ce que**
le transporteur linéaire (9) est plus étroit et le transporteur transversal (10) plus court que la largeur de l'ouverture de chargement (5) des conteneurs (3).

7. Installation selon la revendication 6,
**caractérisée en ce que**
la station de chargement (2) est équipée d'un système (2.1), destiné à transporter les conteneurs (3) transversalement par rapport à la direction longitudinale du transporteur linéaire (9).

8. Installation selon revendication 6 ou 7,
**caractérisée en ce que**
l'extrémité (8.1) du dispositif de transport (8), y compris le transporteur linéaire (9) ainsi que le transporteur transversal (10), peut être déplacée dans le sens de la largeur de l'ouverture de chargement (5) du conteneur (3) reçu à la station de chargement (2).

9. Installation selon l'une des revendications 1 à 8,
**caractérisée en ce que**
la station de chargement (2) fait partie d'un transporteur de conteneurs (1), dont la direction de transport, dans la région de raccordement du dispositif de transport (8), est perpendiculaire à la direction de transport de celui-ci.

10. Installation selon l'une des revendications 1 à 9,
**caractérisée en ce que**
le transporteur transversal (10) est pourvu d'un système de commande d'inversion de sa position de transport.

11. Installation selon l'une des revendications 1 à 10,
**caractérisée en ce que**
le dispositif de transport (8) présente, sur la face inférieure, un réceptacle, dans lequel le transporteur linéaire (9) et le transporteur transversal (10) sont logés dans leur position rentrée.

12. Installation selon l'une des revendications 1 à 11,
**caractérisée en ce que**
le dispositif de transport (8), le transporteur linéaire (9) et le transporteur transversal (10) sont des bandes de transport.
